(19) Europäisches Patentamt / European Patent Office / Office européen des brevets

(11) **EP 3 098 577 A1**

(12) **EUROPEAN PATENT APPLICATION**

(43) Date of publication:
**30.11.2016 Bulletin 2016/48**

(51) Int Cl.:
***G01F 23/296*** (2006.01)      *G01F 23/00* (2006.01)

(21) Application number: **15169867.7**

(22) Date of filing: **29.05.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **Shell Internationale Research
Maatschappij B.V.
2596 HR  Den Haag (NL)**

(72) Inventor: **The designation of the inventor has not
yet been filed**

(74) Representative: **Matthezing, Robert Maarten et al
Shell International B.V.
Intellectual Property Services
P.O. Box 384
2501 CJ The Hague (NL)**

(54)    **FUEL LEVEL DETECTION SYSTEM AND METHOD**

(57)    The invention provides a method and a system for for detecting a fuel level in a tank. The method comprises the steps of: emitting an ultrasonic signal into the tank; receiving an echo signal of the ultrasonic signal reflected in the tank; comparing the received echo signal with a reference signal, the reference signal being representative of a leading edge of an echo on the fuel surface; providing a measurement signal if the received comparison is within a predetermined range; and calculating the fuel level based on a time difference between emitting the ultrasonic signal and a time of the measurement signal.

FIG. 1

## Description

The present invention relates to a system and a method for detecting a fuel level in a fuel tank of a vehicle.

The fuel tank is typically for liquid fuel, such as diesel and petrol. The vehicles include cars and trucks. The system and method may be suitable for liquefied fuels, such as liquefied natural gas (LNG), pressurized or compressed natural gas (CNG), and liquid hydrogen (H2).

Vehicles are typically provided with a fuel gauge (or gas gauge), which is an instrument used to indicate the level of fuel contained in the fuel tank. Commonly used in most motor vehicles, these fuel gauges may also be used for any tank including underground storage tanks.

As used in vehicles, the fuel gauge may comprise at least two parts: A sensing unit, and an indicator. The sensing unit usually comprises a float connected to a potentiometer. As the tank empties, the float drops and slides a moving contact along a resistor, increasing its resistance. In addition, when the resistance is at a certain point, it may also turn on a "low fuel" light in some vehicles.

The pre-fitted sensing unit using a float however has proven to be relatively inaccurate. The float is typically unable to detect fuel levels within 5 to 10% of the full and empty level of the tank. Also, the fuel level indication may be non-linear, for instance due to the mechanical construction of the tank and the slide and/or deterioration of the slide over time.

Other sensor types include capacitive sensors or line of sight sensors.

All of the above sensors however need to be fitted to the inside of the tank, making retrofitting impossible without damaging the tank. Therefore, these sensors are often unsuitable, for instance for tanks which need to be retrofitted, including tanks of third party vehicles where the tank is not owned and may not be modified, or where modifying the fuel tank is not possible, for instance in case of a pressure vessels.

WO-2011089251 offers customers and fleet managers a telematic fuel management solution which assists to ensure all of their fuel is put to good use. The fleet includes, for instance, trucks. The fuel management system uses information provided by the On Board Unit (OBU) of respective vehicles in a fleet. This information enable the system to record information from the vehicles in a database and display this to fleet managers through a website.

Fuel fraud has been a particular problem and despite attempting to address this by connecting to the fuel sensors in vehicles, which is typically also possible via the OBU, these attempts have shown that for many vehicles they do not provide enough information, or with insufficient accuracy, to combat fraud in many instances.

Methods which may help customers detect fuel fraud and use the fuel level to do this include:

Fuel events

i) Fuel Tank Drop Detection - Where a fuel level change by more than a set threshold between 2 points in time triggers an alert which indicates that fuel may have been removed from a vehicle.

ii) Fuel Tank Drop chart - Displays the fuel level for the vehicle against the fuel consumed by the vehicle to assist in identifying fuel tank drops.

iii) Fuel Tank Fill Detection - Where a fuel level changes by more than a set threshold between 2 points in time triggers an alert which indicates that the vehicle has been refuelled and estimates the quantity.

iv) Fuel Tank Calibration - calibrates the fuel sensor to the level of the tank to produce more accurate matching.

Fuel Reconciliation

v) Fuel Reconciliation - Matches fuel fill events to fuel card transactions from the CMI cards database.

vi) Fuel Overfill Detection - Identifies where the vehicles estimates that less fuel has been added to the tank than the CMI database suggests was delivered to the vehicle.

vii) Fuel transactions Validation - Identifies card transactions which do not match a vehicle. This can also be used to compare vehicle fuel consumption to the quantity of fuel being added.

viii) Fuel Transactions - Lists the card transactions and which vehicle transaction they match.

Location Information

ix) Track - Locates a vehicle at a point in time and displays the fuel level of the vehicle.

x) Trace - Displays historical position of the vehicle as a trace line. Clicking on this trace line will display the vehicles fuel level at this point in time.

xi) Trace Fuel Level - Displays a time series chart showing the fluctuation of the fuel level, for instance with respect to an average level or average level change.

Currently the On Board Unit uses the fuel level as reported by the vehicle, typically via a so-called CAN bus interface, to calculate the fuel level. This vehicle reported fuel level may be referred to as FMS Fuel Level.

The vehicle reported fuel level however has caused difficulties in the system as the accuracy, range and repeatability of the pre-installed fuel sensor has proven to be poor. The inaccuracy is aggravated in long distance vehicles with auxiliary fuel tanks fitted.

GB-1377054-A discloses a system for indicating the level of fuel in a tank comprising: (a) a transducer mounted on the bottom or top of the tank and responsive to electrical signals to emit ultrasonic pulses into the tank; (b) means for detecting the ultrasonic echo pulses reflected back from the fuel surface in the tank; (c) a timing circuit for measuring the time lapse between the emission of an ultrasonic pulse and the detection of the corresponding echo pulse; and (d) display means responsive to the timing circuit to display a variable which increases or decreases in accordance with the measured time lapse as an indication of fuel level in the tank. The transducer can be mounted inside the tank, but it is a feature of the system that it functions if the transducer is mounted on the outside of the tank. The system is particularly suitable for use with plastics material fuel tanks where the weakening effect of holes in the tank can be a serious problem. The timing circuit sets a time window to open and close the detection of the echo pulse, by turning an amplifier on and off respectively. The timing circuit turns off the amplifier at 95% of the time it takes for the echo pulse from the top of the tank to return to the transducer, thus excluding this echo from the measurement.

DE-4025326-A1 discloses a system and method to measure the level of a liquid fuel in a tank. In the method, a transducer sends an ultrasonic pulse through the liquid, to be reflected at the surface of the liquid and received by the same transducer. The pulse transmission involves stimulating the transducer to oscillate briefly and relax. A switching curve is generated which corresponds to the envelope curve of the transmission pulse. The transmitted pulse and the received signals are compared with the envelope curve and the corresponding difference is determined.

The system of DE-4025326-A1 requires an installer to set the switching curve in accordance with the transducer signal, including a bias of the zero and a width of the exponential signal.

Previous solutions, like the system disclosed in DE-4025326-A1, provide an ultrasound transducer affixed to the underside of a tank. The system measures the depth of the fluid contents of the tank by emitting an ultrasound pulse and measuring the time to return through the liquid and the casing of the tank. The return signal is passed through an algorithm which compares the amplitude of the signal to a threshold signal which is set up by the installer.

These ultrasonic fuel level sensors have a couple of disadvantages in practice. For instance, when performing an installation for the first time, the installer needs to understand the threshold levels observed on the output. The installer needs to set an appropriate threshold signal based on the signal arriving from the transducer and needs to estimate how the signal will respond when the vehicle is in motion. In addition, passage of ultrasound from the transducer through the glue affixing the sensor to the tank and the exterior of the tank may create an initial spike of reflection due to the initial interface of different density materials. Consequently, if the threshold signal is incorrectly set, the sensor will return wrong, and typically extremely low values.

Other disadvantages of prior art ultrasonic sensors relate to low resilience to noise and errant signals. The prior art systems often detect a liquid level above threshold. High frequency noise, low frequency noise and partial reflection off internal structures of the fuel tank may all cause false levels to be detected. Also, the prior art sensors have relatively low sensitivity compared to the strength of the signal. With a set threshold, the sensitivity of the device is very strongly related to the overall strength of a response. A louder emitted signal results in a stronger response. As the distance to the fuel surface is increased, the reflection from the surface becomes more diffused and generates a smaller response, causing lower sensitivity and increasing the chance of false positives due to noise and reflections.

The present invention aims to provide an improved system and method to detect the level of fuel in a tank.

The present invention therefore provides a method for detecting a liquid level in a tank, the method comprising the steps of:

- emitting an ultrasonic signal into the tank;
- receiving an echo signal of the ultrasonic signal reflected in the tank;
- comparing the received echo signal with a reference signal, the reference signal being representative of a leading edge of an echo on a surface of the liquid;
- providing a surface measurement signal if the received echo signal is within a predetermined range with respect to the reference signal; and
- calculating the liquid level based on a time difference between emitting the ultrasonic signal and a time of the surface measurement signal.

The system of the invention improves the tolerance of the sensor to noise caused by the movement of the contents of the fuel tank and obstructions within the tank, as well as due to other sources of noise or electrical interference.

In an embodiment, the method includes the step of calculating a standard deviation of the received echo signal.

In another embodiment, the step of calculating the standard deviation including multiplying the standard deviation P_dev by a difference value to identify the direction of the deviation.

In an embodiment, the method may include the step of recording the received echo signal as a number of samples; and the step of comparing the received echo signal with a reference signal including the steps of:

comparing a first sample of the number of samples of the echo signal with a threshold value;
continuing if the first sample exceeds the threshold value;
comparing a subsequent sample of the echo signal with the threshold value and with the first sample;
continuing if the subsequent sample exceeds the threshold value and the first sample.

The method may comprise the step of repeating the comparing step up to a selected number of k1 samples.
In an embodiment, the method includes the step of indicating that the comparison is within a predetermined range when all of the k1 samples exceed the threshold value, and also exceed the value of the previous sample of the k1 samples. Herein, the leading edge detection according to the method of the invention may allow to only positively indicate a detected echo signal if all k1 samples exceed the threshold value, as well as the value of the previous sample. Tests have proved that this significantly improves the accuracy, and limits the noise and disturbances, of the measurement.
According to another aspect, the invention provides a system for detecting a fuel level in a tank, the system comprising:

- an emitter arranged on the tank for emitting an ultrasonic signal into the tank;
- a receiver arranged near the emitter for receiving an echo signal of the ultrasonic signal reflected in the tank;
- a control unit connected to the emitter and the receiver for comparing the received echo signal with a reference signal, the reference signal being representative of a leading edge of an echo on the fuel surface, and to provide a measurement signal if the received comparison is within a predetermined range; and
- a timing circuit to calculate the fuel level based on a time lapse between the emission of the ultrasonic signal and the measurement signal.

In an embodiment, the system comprises a battery for powering the system at least temporarily.
In another embodiment, the system comprises a transducer, which includes the emitter and the receiver in a single unit.
In yet another embodiment, the control unit is adapted to calculate a standard deviation of the received echo signal, and to compare the standard deviation with the reference signal.
The invention will be described hereinafter in more detail and by way of example with reference to the accompanying drawings in which:

Fig. 1 shows a side view of an exemplary vehicle provided with a fuel tank;
Fig. 2 shows a perspective view of an embodiment of a transducer suitable for the system of the invention;
Fig. 3 shows a schematic side view of a fuel tank provided with a transducer;
Figs. 4 and 5 show exemplary diagrams of the method of the invention, indicating signal strength (vertical axis) versus time (horizontal axis);
Fig. 6 shows an exemplary diagram of a measurement using a prior art system;
Fig. 7 shows an exemplary diagram of a measurement using the system and method of the invention; and
Figure 8 shows an exemplary diagram of detected fuel level using the system of the invention versus the standard fuel sensor, indicating detected fuel level (vertical axis) versus time (horizontal axis).

In the drawings and the description, like reference numerals relate to like components.

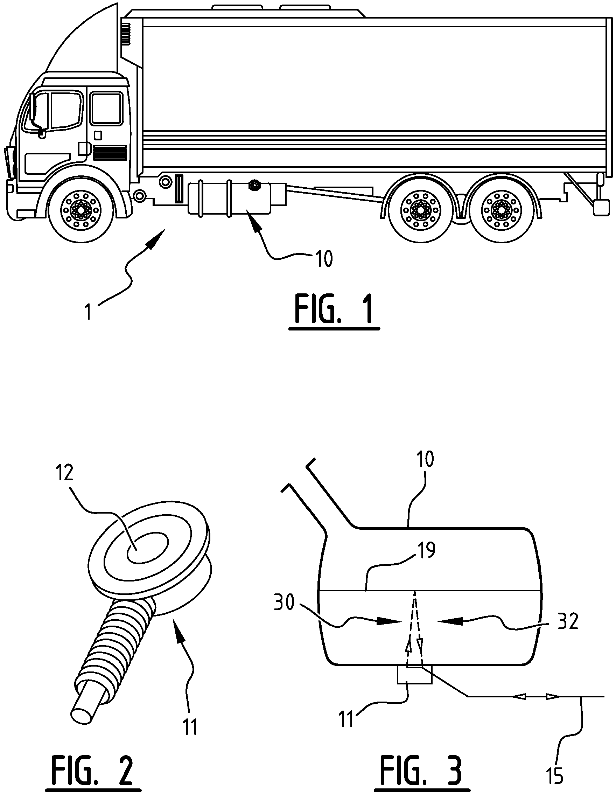

Figure 1 shows a vehicle 1 provided with at least one fuel tank 10. The vehicle may be a car, whereas Figure 1 shows a truck. Trucks may be provided with multiple fuel tanks 10, for instance a primary tank and a secondary tank. The primary fuel tank of the vehicle is typically provided with a standard fuel sensor, such as a float type fuel sensor. The secondary tank may not be provided with a standard fuel sensor.
Figure 2 shows a transducer 11. The transducer may be an ultrasonic transducer. The transducer can be attached to one of the fuel tanks. In an embodiment, the device 11 may be arranged on the underside of the tank 10. The transducer may comprise a ceramic surface 12 on the top with an inbuilt thermometer (not shown). The surface 12 is potentially brittle but is protected by being glued directly onto the tank, for instance onto the underside of the aluminium tank, using acoustic coupling glue. The underside of the transducer may comprise an aluminium casing with an armoured coaxial cable which extends around the fuel tank and may be connected to an extension cable. The extension cable 15 connects the transducer 11 to a processing unit and/or to the on-board unit (OBU) of the vehicle. The processing unit of the system may be categorised IP61. The processing unit may be installed in the interior of the vehicle.
The device 11 may be protected against water ingress in accordance with an appropriate International Protection Marking, IEC standard 60529, sometimes interpreted as Ingress Protection Marking, such as IP66 or IP 67. In a practical embodiment, the transducer 11 may be 500 kHz flow meter transducer as marketed by CNIR Hurricane Tech. (Shenzhen) Co., Ltd., China. The transducer may be selected to emit and receive one or more ultrasonic frequencies within the range of, for instance, 25 kHz up to 750 kHz.

In an embodiment, the transducer may be connected to a data processing unit (not shown). The end facing the transducer 11 may have a rubber water seal to prevent water and salt damaging the connectors. This is fitted alongside the vehicles wiring loom. The cable may be shielded to reduce the impact of electrical noise on the analogue signals.

In an embodiment, the system of the invention may be provided with an internal battery. The battery enables the system to operate independently of the vehicle for a predetermined time, for instance for a number of hours. The latter enables the system to detect fuel level changes, and possible associated fraud or fuel theft, when the vehicle is turned off also.

The fuel sensor of the invention operates by emitting a pulse 30 of ultrasound from the ceramic Ultrasound Transducer 11 (Fig. 3). The pulse passes through the (metallic) base of the tank 10 and the contents 19 of the tank before reflecting off the surface of the contents and reflecting downwards and passing through the base of the tank before being received by the transducer and generating a voltage.

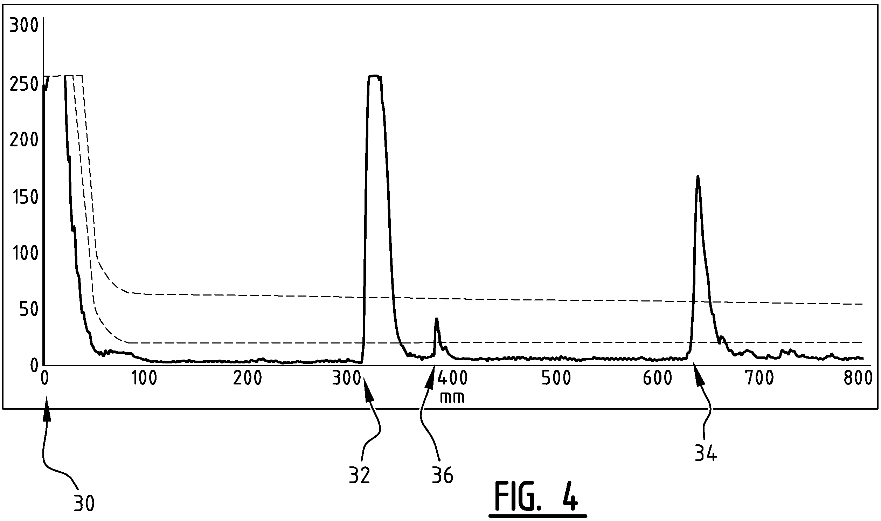

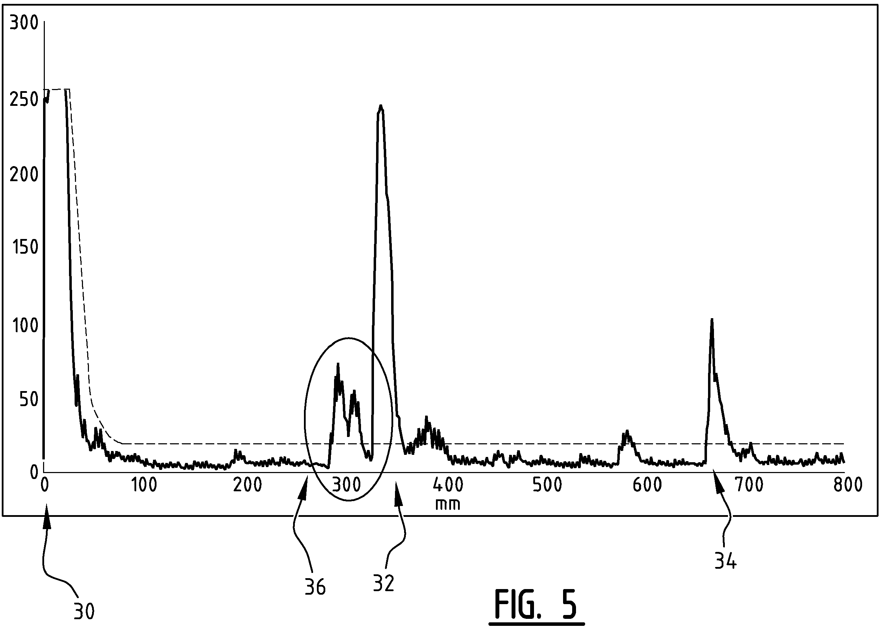

The fuel surface echo signal 32 generated when the pulse has echoed from the surface of the fuel 19 needs to be separated from other sources. For instance, the pulse may also reflect from the opposite side of the tank, resulting in tank echo signal 34 (Figs. 4, 5).

The speed of sound through the liquid may be calculated as:

$$c\_fluid = \sqrt{(K/\rho)}$$

wherein K is the bulk modulus of the fluid, and $\rho$ is the density of the fluid. For diesel fuel at 20 degrees Celsius this speed is about 1250m/s, while both the bulk modulus and the density of the fluid vary with temperature. To adjust for this the transducer may be provided with a thermometer built into the transducer. The thermometer measures the temperature of the base of the tank 10.

The time between the emission of the pulse and receiving a response is then measured and combined with the expected speed of sound in the contents of the tank giving the depth of the contents of the tank, for instance in mm.

Noise caused by transmission through the tank, residual echoes from previous pings, electrical noise from the vehicle and obstructions within the tank may all create interference, which may result in noise signals induced in the transducer 11.

Tests allowed the applicant to collect data from sensors 11 for a vehicle on the move. The data showed that when the vehicle was moving the strength of the signal pulse 30 was reduced and the noise in the signal increased. This was particularly noticeable when the vehicle changed gears as this caused spikes in pressure and quantity of fuel travelling back through the fuel return pipe disturbing the surface of the tank and creating ultrasound noise leading to spikes 36 in the signal detected by the sensor 11. See Figs. 4 and 5.

The sensor as provided by the manufacturer detects an echo as any signal above an installer defined threshold. The threshold is for instance a threshold voltage as induced in the sensor 11, i.e. corresponding to the amplitude of the induced signal. Thus, if the amplitude of one of the spikes 36 exceeds the set threshold voltage, as this would be detected as a positive reading. This proved problematic for a number of reasons. The disturbances reducing the signal and increasing the noise while the vehicle is in motion make it difficult for installers to judge the correct level of the threshold accurately.

The method of the invention enables to separate the signal generated when the pulse has echoed from the surface of the fuel from other sources, such as noise caused by transmission through the tank, residual echoes from previous pings, electrical noise from the vehicle and obstructions within the tank. The latter all create interference, which using the method and system of the invention can be eliminated.

The system of the invention looks at data received by the transducer and/or the processing box, and for spikes in the signal compares the time taken for the voltage to rise from the minimum to the maximum voltage to a reference rising edge signal. I.e., the rising slope of each spike is compared to the rising slope of a reference signal.

For instance, the system may be set to collect data at a certain frequency f_measurement. The f_measurement may be at any suitable frequency, depending on available equipment and on the requirements, but may be, for instance, in the range of 500 to 5,000 data points per second.

Tests may have indicated that at a selected f_measurement, it will take a certain number of k1 samples for the voltage to rise from the minimum to the maximum voltage. The number of k1 samples can for instance be determined from diagrams, such as shown in Figures 4 and 5. The sample frequency may be selected such that the leading edge of the reflection signal 32 at the fuel surface may, for instance, take at least about 3 to 10 data samples to rise from the minimum to the maximum value. Said number of samples, or the shape of the leading edge of the reflection signal, may be determined from observations of the data seen in tests.

In order to detect the deviation rather than the raw amplitude, the standard deviation over the selected number of samples was used. For k1 samples, the average measured value P_av at a measuring point n is given by:

$$P_{av} = \frac{P_{n-2} + P_{n-1} + P_n + P_{n+1} + P_{n+2}}{k1}$$

For a certain average P_av, the standard deviation P_dev can be calculated by:

$$P_{dev} = \sqrt{\frac{(P_{n-2} - P_{av})^2 + (P_{n-1} - P_{av})^2 + (P_n - P_{av})^2 + (P_{n+1} - P_{av})^2 + (P_{n+2} - P_{av})^2}{k1}}$$

wherein P_dev is a total deviation for measuring point n.

As the deviation may be a high number when there is high frequency noise, the P_dev may optionally be multiplied by (P_(n+2)-P_(n-2)), which allows the value to identify the direction of the deviation. Negative values can be ignored at this point.

In the above formulas, k1 may be replaced with any suitable number of samples, as determined for a particular application, and being sufficient to distinguish between an echo at the fuel surface and noise. In practice, k1 may be for instance about 5 or above.

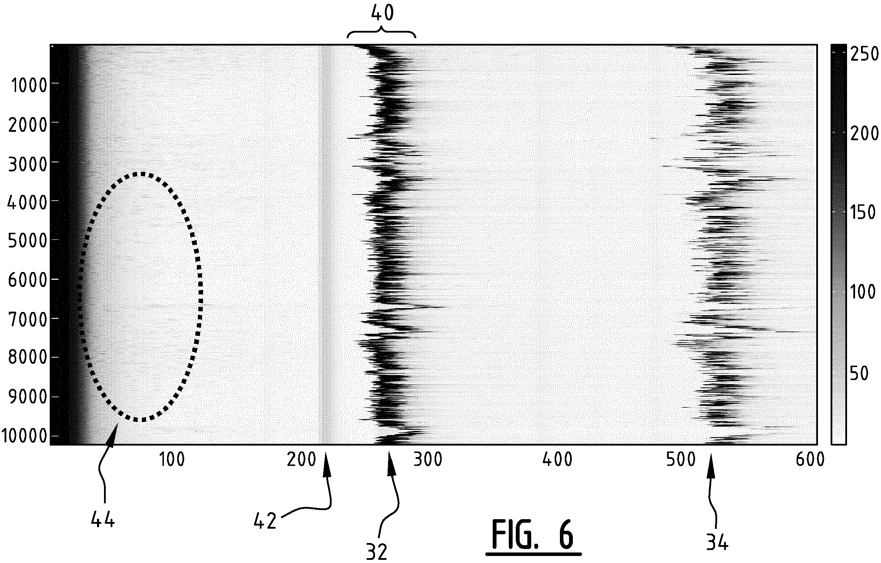

Fig. 6 shows the variation 40 in the position of the surface reflection signal 32, using the factory provided transducer and system. Fig. 6 also shows noise, such as the band 42 and the noise 44 reflected passing through the tank are all strongly visible.

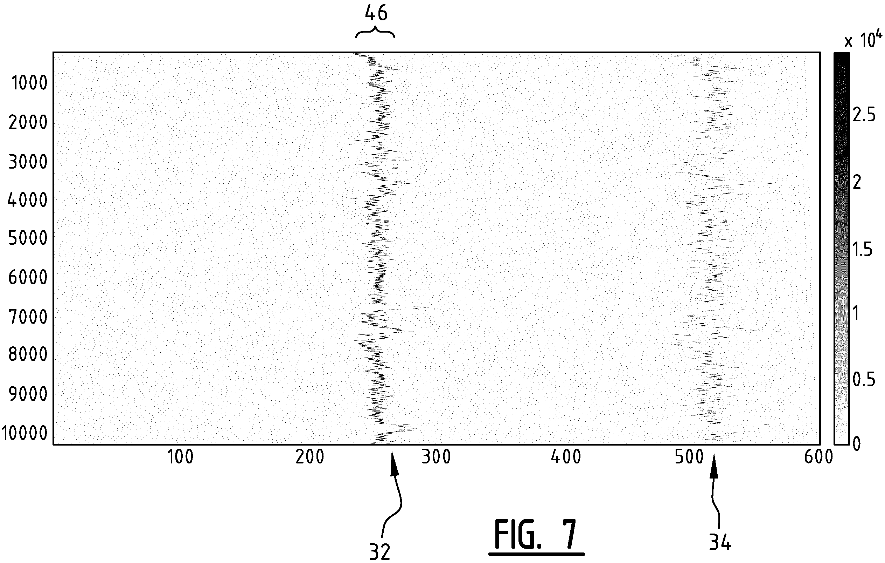

Fig. 7 shows an exemplary measurement, using the method and system of the invention. Applying the edge strength detection detect just the leading edges of the reflection spikes 32 (on the surface of the fuel) and 34 (on the other side of the tank), while ignoring noise. Also the deviation 46 in the detected signal is significantly smaller.

For instance, using a value of k2*(the maximum strength of the edge) as a threshold and detecting the first point at which the detected level exceeds this threshold gives a first data point for each pulse. In a practical embodiment, the constant k2 may be in the range of 0.2 to 0.6, for instance 0.5. The constant k2 allows to ignore low intensity noise. Where no second data point exceeding the threshold was received, or a second data point being at or below the first data point, the pulse was ignored on the assumption that the signal was not of a good enough quality.

The median average is preferred, as it tends towards gradual changes rather than sharp variations which reduces the appearance of false fuel tank drops. However the median average will still indicate a sharp detectable drop went the fuel level takes a step downwards between data points.

A rolling average of the data points may smoothen the detected signal over filling and dropping transactions leaving a curve from one level to the other rather than a sharp edge.

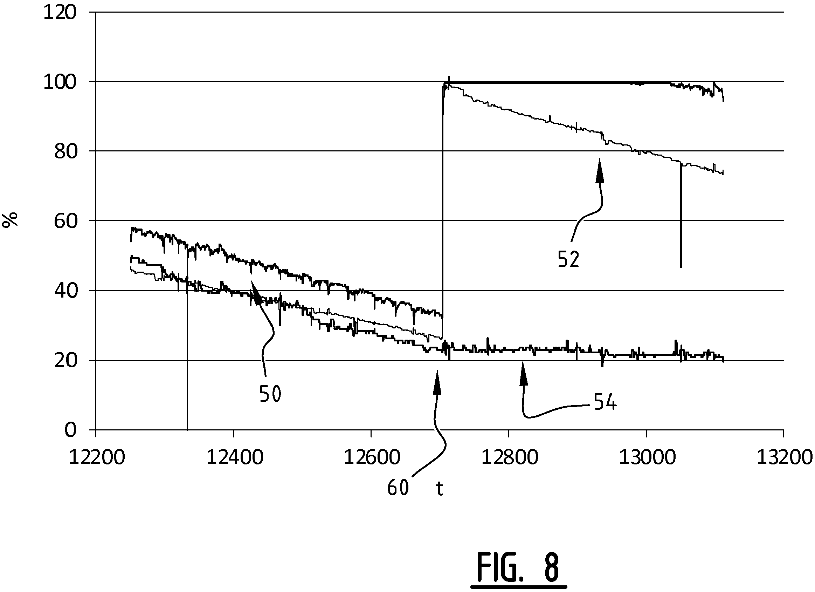

Figure 8 shows a fuel fill percentage (%) on the vertical axis versus fuel consumed in time t on the horizontal axis. The diagram shows readings of the vehicle fuel sensor 50, a first sensor 52 of the invention indicating the fuel level of the primary tank, and a second sensor 54 of the invention indicating the fuel level in a secondary tank. I.e., Fig. 8 shows readings for a vehicle using the legacy fuel sensor (a float type sensor) alongside two ultrasound sensors using the method of the invention to detect the fuel level.

The standard sensor 50 reads 100% after fill event 60 to the primary tank, as does the fuel sensor 52 connected to the primary tank. The data for the secondary tank remains at the lower level as no fuel was added to the secondary tank. In this instance the FMS line Estimates the fuel fill as 860 litre while the actual fill was 630 litre.

The system and method of the invention provide improved sensitivity and accuracy for detecting the level of fuel. Looking for an edge in the amplitude of the reflected signal allows a much clearer resolution of the leading edge of the echo, which gives the position at which the level of the liquid can most accurately be detected. High frequency and low frequency noise can be ignored, as the change in amplitude does not have the same characteristic change as a genuine reflection from the fuel surface.

The installation of the sensor becomes simpler. While the installer is testing the sensor, the system is able to detect the fuel level if it is above a threshold level. Knowing the expected length of the leading edge of the signal allows for the elimination of high frequency random noise before the signal and allows to measure the returning signal according to its strength. Herein, the size of the echo response and the leading edge thereof is used, rather than just its difference with respect to a threshold signal.

The present invention is not limited to the above-described embodiments thereof, wherein various modifications are conceivable within the scope of the appended claims. For instance, features of respective embodiments may be combined.

**Claims**

1. Method for detecting a liquid level in a tank, the method comprising the steps of:

   - emitting an ultrasonic signal into the tank;
   - receiving an echo signal of the ultrasonic signal reflected in the tank;
   - comparing the received echo signal with a reference signal, the reference signal being representative of a leading edge of an echo on the surface of the liquid;
   - providing a surface measurement signal if the received echo signal is within a predetermined range with respect to the reference signal; and
   - calculating the liquid level based on a time difference between emitting the ultrasonic signal and a time of the surface measurement signal.

2. The method of claim 1, including the step of calculating a standard deviation of the received echo signal.

3. The method of claim 2, the step of calculating the standard deviation comprising calculating an average measured value P_av at a measuring point n in time over a selected number of samples k1:

$$P_{av} = \frac{P_{n-2} + P_{n-1} + P_n + P_{n+1} + P_{n+2}}{k1}$$

and using the average measured value P_av to calculate the standard deviation P_dev by:

$$P_{dev} = \sqrt{\frac{(P_{n-2}-P_{av})^2 + (P_{n-1}-P_{av})^2 + (P_n-P_{av})^2 + (P_{n+1}-P_{av})^2 + (P_{n+2}-P_{av})^2}{k1}} .$$

4. The method of claim 3, the step of calculating the standard deviation including multiplying the standard deviation P_dev by a difference value to identify the direction of the deviation.

5. The method of claim 4, including the step of ignoring negative values of the standard deviation P_dev.

6. The method of claim 1, comprising the step of recording the received echo signal as a number of samples; and the step of comparing the received echo signal with a reference signal comprising the steps of:

   comparing a first sample of the number of samples of the echo signal with a threshold value;
   continuing if the first sample exceeds the threshold value;
   comparing a subsequent, second sample of the number of samples of the echo signal with the threshold value and with the first sample;
   continuing if the second sample exceeds the threshold value and the value of the first sample.

7. The method of claim 6, comprising the step of repeating the comparing step up to a selected number of k1 samples.

8. The method of claim 7, including the step of indicating that the comparison is within a predetermined range when all of the k1 samples exceed the threshold value, and also exceed the value of the previous sample of the k1 samples.

9. A system for detecting a liquid level in a tank, the system comprising:

- an emitter arranged on the tank for emitting an ultrasonic signal into the tank;
- a receiver arranged near the emitter for receiving an echo signal of the ultrasonic signal reflected in the tank;
- a control unit connected to the emitter and the receiver for comparing the received echo signal with a reference signal, the reference signal being representative of a leading edge of an echo on the surface of the liquid, and to provide a measurement signal if the received echo signal is within a predetermined range with respect to the reference signal; and
- a timing circuit to calculate the liquid level based on a time lapse between the emission of the ultrasonic signal and the measurement signal.

10. The system of claim 9, comprising a battery for powering the system at least temporarily.

11. The system of claim 9, comprising a transducer, which includes the emitter and the receiver in a single unit.

12. The system of claim 9, the control unit being adapted to calculate a standard deviation of the received echo signal, and to compare the standard deviation with the reference signal.

13. The system of claim 9, the receiver being adapted to record the echo signal at a sample frequency.

FIG. 1

FIG. 2

FIG. 3

FIG. 4

**FIG. 5**

**FIG. 6**

FIG. 7

EP 3 098 577 A1

FIG. 8

Europäisches
Patentamt

European
Patent Office

Office européen
des brevets

## EUROPEAN SEARCH REPORT

Application Number

EP 15 16 9867

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/107954 A1 (LIH SHYH-SHIUH [US] ET AL) 17 April 2014 (2014-04-17) | 1,9-11 | INV. G01F23/296 |
| Y | * figure 27 * <br> * paragraph [0153] - paragraph [0155] * <br> ----- | 2-8,12, 13 | ADD. G01F23/00 |
| Y | Steven W Smith: "Chapter 2: Statistic, Probability and Noise", Scientist and Engineer's Guide to DigitalSignal Processing, 1 January 1999 (1999-01-01), pages 11-34, XP055228378, ISBN: 978-0-9660176-6-3 Retrieved from the Internet: URL:DSPguide.com [retrieved on 2015-11-13] * figures 2-2 * <br> ----- | 2-8,12, 13 | |
| A,D | GB 1 377 054 A (FORD MOTOR CO) 11 December 1974 (1974-12-11) <br> ----- | 1-13 | |
| A | EP 2 369 367 A1 (SIEMENS MILLTRONICS PROC INSTR [CA]) 28 September 2011 (2011-09-28) <br> ----- | 1-13 | TECHNICAL FIELDS SEARCHED (IPC) |
| A | ZAHIRI-AZAR R ET AL: "Time-delay estimation in ultrasound echo signals using individual sample tracking", IEEE TRANSACTIONS ON ULTRASONICS, FERROELECTRICS AND FREQUENCY CONTROL, IEEE, US, vol. 55, no. 12, 1 December 2008 (2008-12-01), pages 2640-2650, XP011238573, ISSN: 0885-3010, DOI: 10.1109/TUFFC.2008.979 <br> ----- | 1-13 | G01F |
| A | EP 2 369 362 A1 (SIEMENS MILLTRONICS PROC INSTR [CA]) 28 September 2011 (2011-09-28) <br> ----- | 1-13 | |

-/--

The present search report has been drawn up for all claims

| Place of search | Date of completion of the search | Examiner |
|---|---|---|
| The Hague | 16 November 2015 | Verbandt, Yves |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 15 16 9867

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2011/239664 A1 (SANDERS RUSSELL L [US] ET AL) 6 October 2011 (2011-10-06) ----- | 1-13 | |
| A | US 2015/000396 A1 (MAGUIN GEORGES [FR] ET AL) 1 January 2015 (2015-01-01) ----- | 1-13 | |
| A | US 2014/360264 A1 (VOGEL MARKUS [DE] ET AL) 11 December 2014 (2014-12-11) ----- | 1-13 | |
| A | US 5 587 969 A (KROEMER NILS [US] ET AL) 24 December 1996 (1996-12-24) ----- | 1-13 | |

**TECHNICAL FIELDS SEARCHED (IPC)**

The present search report has been drawn up for all claims

| Place of search | Date of completion of the search | Examiner |
|---|---|---|
| The Hague | 16 November 2015 | Verbandt, Yves |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 16 9867

This annex lists the patent family members relating to the patent documents cited in the above-mentioned European search report.
The members are as contained in the European Patent Office EDP file on
The European Patent Office is in no way liable for these particulars which are merely given for the purpose of information.

16-11-2015

| Patent document cited in search report | | Publication date | Patent family member(s) | | Publication date |
|---|---|---|---|---|---|
| US 2014107954 | A1 | 17-04-2014 | NONE | | |
| GB 1377054 | A | 11-12-1974 | DE | 2433133 A1 | 13-02-1975 |
| | | | GB | 1377054 A | 11-12-1974 |
| EP 2369367 | A1 | 28-09-2011 | NONE | | |
| EP 2369362 | A1 | 28-09-2011 | NONE | | |
| US 2011239664 | A1 | 06-10-2011 | US | 2011239664 A1 | 06-10-2011 |
| | | | US | 2012261396 A1 | 18-10-2012 |
| | | | US | 2015177047 A1 | 25-06-2015 |
| US 2015000396 | A1 | 01-01-2015 | CN | 104185726 A | 03-12-2014 |
| | | | DE | 102012005281 A1 | 19-09-2013 |
| | | | EP | 2834487 A1 | 11-02-2015 |
| | | | JP | 2015512013 A | 23-04-2015 |
| | | | KR | 20140106712 A | 03-09-2014 |
| | | | US | 2015000396 A1 | 01-01-2015 |
| | | | WO | 2013135486 A1 | 19-09-2013 |
| US 2014360264 | A1 | 11-12-2014 | DE | 102011089231 A1 | 20-06-2013 |
| | | | EP | 2795268 A1 | 29-10-2014 |
| | | | US | 2014360264 A1 | 11-12-2014 |
| | | | WO | 2013092099 A1 | 27-06-2013 |
| US 5587969 | A | 24-12-1996 | AT | 166726 T | 15-06-1998 |
| | | | DE | 4308373 A1 | 22-09-1994 |
| | | | DK | 0689679 T3 | 22-03-1999 |
| | | | EP | 0689679 A1 | 03-01-1996 |
| | | | ES | 2117258 T3 | 01-08-1998 |
| | | | JP | 3207426 B2 | 10-09-2001 |
| | | | JP | H08507607 A | 13-08-1996 |
| | | | US | 5587969 A | 24-12-1996 |
| | | | WO | 9422033 A1 | 29-09-1994 |

EPO FORM P0459

For more details about this annex : see Official Journal of the European Patent Office, No. 12/82

**EP 3 098 577 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011089251 A
- GB 1377054 A
- DE 4025326 A1